# EUROPEAN PATENT APPLICATION

(11) **EP 4 439 956 A1**
(43) Date of publication of application: **02.10.2024**
(21) Application number: 23168562.9
(22) Date of filing: 18.04.2023
(51) Int. Cl.: H02M 3/158, H02M 1/00, H02J 3/38, H02J 3/46, H02M 1/32

(54) **APPARATUS FOR POWER CONVERSION AND METHOD FOR OPERATING THE APPARATUS**

(30) Priority: 31.03.2023 CN 202310340209
(71) Applicant: Hitachi Energy Ltd, 8050 Zürich (CH)
(72) Inventor: HUANG, Xing, Beijing 100024 (CN); YANG, XiaoBo, Beijing 100015 (CN); TUCKEY, Andrew Mark, Livingstone 0837 (AU)
(74) Representative: Vossius & Partner Patentanwälte Rechtsanwälte mbB

(57) **Abstract**

An apparatus for power conversion and a method for operating the apparatus are provided. The apparatus comprises: at least one of a first partial power converters (PPC) string and a second PPC string, wherein the first PPC string comprising more than one series-connected PPCs, wherein an output of each PPC of the more than one series-connected PPCs is connected in series; and wherein the second PPC string comprising at least one series-connected PPC and at least one PPC set, wherein each PPC set comprises more than one parallel-connected PPCs, the respective outputs of the more than one parallel-connected PPCs are connected in parallel and further connected to the output of the PPC set, and respective outputs of the at least one series-connected PPC and the at least one PPC set are connected in series, wherein, for each PPC in the apparatus, the respective input of the PPC is connected to a corresponding power source, and the input of the PPC and the output of the PPC have one common terminal, and the PPC comprises at least one controllable switch, and wherein the at least one of the first PPC string and the second PPC string is connected in parallel with a DC bus , and a circuit protector, comprising at least one of: one PPC protector corresponding to each PPC in the apparatus; one set protector corresponding to each PPC set in the apparatus; and one string protector corresponding to each of the first PPC string and the second PPC string.

## Description

### TECHNICAL FIELD

The present disclosure relates to the field of power conversion, and more specifically, to an apparatus and a system for power conversion, and a method for operating an apparatus for power conversion.

### BACKGROUND

Energy Storage System (ESS) is a system that contains, for example, batteries (such as, lithium batteries, lead batteries) as energy storage carriers to store electrical energy and supply electrical energy for a certain period of time. The ESS is widely used in power grids to adjust the peak and frequency of the power grids, thereby ensuring the safe operation of the power grids. Therefore, it is expected to provide protection for the fault occurs in the ESS to improve the reliability of the ESS.

### SUMMARY

The present disclosure provides an apparatus and a system for power conversion and a method for operating the apparatus.

According to an aspect of the present disclosure, an apparatus for power conversion is provided. The apparatus includes at least one of a first partial power converter (PPC) string and a second PPC string, wherein the first PPC string comprising more than one series-connected PPCs, wherein an output of each PPC of the more than one series-connected PPCs is connected in series; and wherein the second PPC string comprising at least one series-connected PPC and at least one PPC set, wherein each PPC set comprises more than one parallel-connected PPCs, the respective outputs of the more than one parallel-connected PPCs are connected in parallel and further connected to the output of the PPC set, and respective outputs of the at least one series-connected PPC and the at least one PPC set are connected in series, wherein, for each PPC in the apparatus, the respective input of the PPC is connected to a corresponding power source, and the input of the PPC and the output of the PPC have one common terminal, and the PPC comprises at least one controllable switch, and wherein the at least one of the first PPC string and the second PPC string is connected in parallel with a DC bus, and a circuit protector, comprising at least one of: one PPC protector corresponding to each PPC in the apparatus; one set protector corresponding to each PPC set in the apparatus; and one string protector corresponding to each of the first PPC string and the second PPC string.

According to some embodiments, the circuit protector comprises the one PPC protector corresponding to each PPC in the apparatus, which corresponds to a series-connected PPC and comprises: a bypass switch connected in parallel with the output of the PPC; and at least one group of series-connected switches, comprising at least one of: a first group of switches connecting in series with the input of the PPC; and a second group of switches connecting in series with the output of the PPC.

According to some embodiments, the apparatus comprises the second PPC string, and the circuit protector comprises the one PPC protector corresponding to each PPC in the apparatus and the one set protector corresponding to each PPC set in the apparatus, and wherein the PPC protector corresponds to a parallel-connected PPC and comprises: a first group of switches connecting in series with the input of the PPC; and/or a second group of switches connecting in series with the output of the PPC, and wherein the set protector comprises: a bypass switch connecting in parallel with the output of the PPC set.

According to some embodiments, the set protector further comprises: a group of series-connected switches connecting in series with the output of the PPC set.

According to some embodiments, the PPC in the apparatus includes a first AC/DC converter and a second AC/DC converter coupled at AC ports of the first AC/DC converter and the second AC/DC converter, and wherein a DC port of the second AC/DC converter forms one of the input and the output of the PPC, and a DC port of the first AC/DC converter and the DC port of the second AC/DC converter are connected in series to form the other of the input and the output of the PPC, and wherein the circuit protector comprises the one PPC protector corresponding to each PPC in the apparatus, which corresponds to a series-connected PPC, and wherein, in response to that the DC port of the second AC/DC converter forms the input of the PPC and the DC port of the first AC/DC converter and the DC port of the second AC/DC converter are connected in series to form the output of the PPC, and the PPC protector comprises a bypass switch connected in parallel with the input of the PPC, and wherein, in response to that the DC port of the second AC/DC converter forms the output of the PPC and the DC port of the first AC/DC converter and the DC port of the second AC/DC converter are connected in series to form the input of the PPC, and the PPC protector comprises a group of series-connected switches connecting in series with the input of the PPC.

According to some embodiments, the circuit protector comprises the one PPC protector corresponding to each PPC in the apparatus, which corresponds to a series-connected PPC and comprises: a bypass switch connected in parallel with the output of the PPC.

According to some embodiments, circuit protector comprises the one string protector corresponding to each of the first PPC string and the second PPC string, which comprises: a string switch connected in series with the output of the series-connected PPCs in the string corresponding to the string protector.

According to an aspect of the present disclosure, a method of operating the apparatus of power conversion according to the present disclosure. The method includes: in response to that a fault occurs in the apparatus, operating the circuit protector.

According to some embodiments, the circuit protector comprises the one PPC protector corresponding to each PPC in the apparatus, which corresponds to a series-connected PPC and comprises: a bypass switch connected in parallel with the output of the PPC; and at least one group of series-connected switches, comprising at least one of: a first group of switches connecting in series with the input of the PPC; and a second group of switches connecting in series with the output of the PPC, and wherein the operating the circuit protector comprises: in response to that the fault occurs at a series-connected PPC, switching off all the controllable switches in the PPC corresponding to the fault; switching off the at least one group of series-connected switches in the PPC protector for the PPC corresponding to the fault; and in response to that the number of normal series-connected PPCs and PPC sets in the string corresponding to the fault is larger than a preset threshold, switching on the bypass switch in the PPC protector for the PPC corresponding to the fault.

According to some embodiments, the apparatus comprises the second PPC string, and the circuit protector comprises the one PPC protector corresponding to each PPC in the apparatus and the one set protector corresponding to each PPC set in the apparatus, and wherein the PPC protector corresponds to a parallel-connected PPC and comprises: a first group of switches connecting in series with the input of the PPC; and/or a second group of switches connecting in series with the output of the PPC, and wherein the operating the circuit protector comprises: in response to that the fault occurs at a parallel-connected PPC, switching off all the controllable switches in the PPC corresponding to the fault; and switching off the at least one group of series-connected switches in the PPC protector for the PPC corresponding to the fault.

According to some embodiments, the set protector comprises: a bypass switch connecting in parallel with the output of the PPC set, and wherein the operating the circuit protector further comprises: in response to that the PPC set corresponding to the fault does not comprise any normal PPC and the number of normal series-connected PPCs and PPC sets in the string corresponding to the fault is larger than a preset threshold, switching on the bypass switch in the set protector for the set corresponding to the fault.

According to some embodiments, the PPC in the apparatus includes a first AC/DC converter and a second AC/DC converter coupled at AC ports of the first AC/DC converter and the second AC/DC converter, and wherein a DC port of the second AC/DC converter forms the input of the PPC, and a DC port of the first AC/DC converter and the DC port of the second AC/DC converter are connected in series to form the output of the PPC, and wherein the method further comprises: in response to that the fault occurs at a series-connected PPC and the number of normal series-connected PPCs and PPC sets in the string corresponding to the fault is larger than a preset threshold, switching on all the controllable switches in the PPC corresponding to the fault.

According to some embodiments, the circuit protector comprises the one PPC protector corresponding to each PPC in the apparatus, which corresponds to a series-connected PPC and comprises: a bypass switch connected in parallel with the output of the PPC, and wherein the operating the circuit protector comprises: in response to that the fault occurs at a series-connected PPC, switching off all the controllable switches in the PPC corresponding to the fault; and in response to that the number of normal series-connected PPCs and PPC sets in the string corresponding to the fault is larger than a preset threshold, switching on the bypass switch in the PPC protector for the PPC corresponding to the fault.

According to some embodiments, the PPC in the apparatus includes a first AC/DC converter and a second AC/DC converter coupled at AC ports of the first AC/DC converter and the second AC/DC converter, and wherein a DC port of the second AC/DC converter forms the input of the PPC, and a DC port of the first AC/DC converter and the DC port of the second AC/DC converter are connected in series to form the output of the PPC, and wherein the circuit protector comprises the one PPC protector corresponding to each PPC in the apparatus, which corresponds to a series-connected PPC and comprises: a bypass switch connected in parallel with the input of the PPC, wherein the operating the circuit protector comprises: in response to that the fault occurs at a series-connected PPC and the number of normal series-connected PPCs and PPC sets in the string corresponding to the fault is larger than a preset threshold, switching on all the controllable switches in the first AC/DC converter in the PPC corresponding to the fault, and switching off all the controllable switches in the second AC/DC converter in the PPC corresponding to the fault; and switching on the bypass switch in the PPC protector for the PPC corresponding to the fault.

According to some embodiments, the PPC in the apparatus includes a first AC/DC converter and a second AC/DC converter coupled at AC ports of the first AC/DC converter and the second AC/DC converter, and wherein a DC port of the second AC/DC converter forms the output of the PPC, and a DC port of the first AC/DC converter and the DC port of the second AC/DC converter are connected in series to form the input of the PPC, and wherein the circuit protector comprises the one PPC protector corresponding to each PPC in the apparatus, which corresponds to a series-connected PPC and comprises: a group of series-connected switches connecting in series with the input of the PPC, wherein the operating the circuit protector comprises: in response to that the fault occurs at a series-connected PPC, switching on all the controllable switches in the second AC/DC converter in the PPC corresponding to the fault, and switching off all the controllable switches in the first AC/DC converter in the PPC corresponding to the fault; and switching off the group of series-connected switches in the PPC protector for the PPC corresponding to the fault.

According to some embodiments, the circuit protector comprises the one string protector corresponding to each of the first PPC string and the second PPC string, which comprises: a string switch connected in series with the output of the series-connected PPCs in the string corresponding to the string protector, and wherein the operating the circuit protector comprises: in response to that the fault is a short-circuited fault at the DC bus, switching off all the string switches in the apparatus; and in response to that the fault is a short-circuited fault at a power source, turning off all the controllable switches in the PPC corresponding to the fault, or switching off the string switch in the string protector for the string corresponding to the fault.

It should be understood that the content described in this section is not intended to identify critical or important features of the embodiments of the present disclosure, and is not used to limit the scope of the present disclosure either. Other features of the present disclosure will be easily understood through the following specification.

### BRIEF DESCRIPTION OF THE DRAWINGS

The drawings exemplarily show embodiments and form a part of the specification, and are used to illustrate example implementations of the embodiments together with a written description of the specification. The embodiments shown are merely for illustrative purposes and do not limit the scope of the claims. Throughout the drawings, like reference signs denote like but not necessarily identical elements.
Figs. 1A-1C are schematic diagrams illustrating an apparatus of power conversion according to an embodiment of the present disclosure.
Figs. 2A-2B are schematic diagrams illustrating the connection configuration of the PPC in Fig. 1A-1C according to an embodiment of the present disclosure.
Fig. 3 is a schematic diagram illustrating the PPC protector for series-connected PPC in the apparatus of power conversion in Figs. 1A-1C according to an embodiment of the present disclosure.
Fig. 4 is a schematic diagram illustrating the PPC protector for parallel-connected PPC and the set protector in the apparatus of power conversion in Figs. 1A-1C according to an embodiment of the present disclosure.
Fig. 5A-5D are schematic diagrams illustrating the PPC protector for series-connected PPC in the apparatus of power conversion in Figs. 1A-1C according to an embodiment of the present disclosure.
Fig. 6 is a schematic diagram illustrating the string protector for the string of PPCs in the apparatus of power conversion in Figs. 1A-1C according to an embodiment of the present disclosure.
Fig. 7 is a flowchart illustrating a method for operating the apparatus of power conversion in Figs. 1A-1C according to an embodiment of the present disclosure.
Fig. 8 is a flowchart illustrating the process of operating the circuit protector in Fig. 7 according to an embodiment of the present disclosure.
Fig. 9 is a flowchart illustrating the process of operating the circuit protector in Fig. 7 according to an embodiment of the present disclosure.
Fig. 10 is a flowchart illustrating the process of operating the circuit protector in Fig. 7 according to an embodiment of the present disclosure.
Fig. 11 is a flowchart illustrating the process of operating the circuit protector in Fig. 7 according to an embodiment of the present disclosure.
Fig. 12 is a flowchart illustrating the process of operating the circuit protector in Fig. 7 according to an embodiment of the present disclosure.

### DETAILED DESCRIPTION OF THE EMBODIMENTS

The present disclosure will be further described in detail below with reference to the drawings and embodiments. It can be understood that embodiments described herein are used merely to explain a related disclosure, rather than limit the disclosure. It should be additionally noted that, for ease of description, only parts related to the related disclosure are shown in the drawings.

It should be noted that the embodiments in the present disclosure and features in the embodiments can be combined with each other without conflict. If the number of elements is not specifically defined, there may be one or more elements, unless otherwise expressly indicated in the context. In addition, numbers of steps or functional modules used in the present disclosure are used merely to identify the steps or functional modules, rather than limit either a sequence of performing the steps or a connection relationship between the functional modules. As used herein, the term "and/or" includes any and all combinations of one or more of the associated listed items. The term "based on" is to be construed as "based at least in part on".

According to embodiments of the present disclosure, an apparatus for power conversion and a method for operating the apparatus are provided.

According to some embodiments, the apparatus for power conversion includes: at least one of a first partial power converters (PPC) string and a second PPC string, wherein the first PPC string comprising more than one series-connected PPCs, wherein an output of each PPC of the more than one series-connected PPCs is connected in series ; and wherein the second PPC string comprising at least one series-connected PPC and at least one PPC set, wherein each PPC set comprises more than one parallel-connected PPCs, the respective outputs of the more than one parallel-connected PPCs are connected in parallel and further connected to the output of the PPC set, and respective outputs of the at least one series-connected PPC and the at least one PPC set are connected in series, wherein, for each PPC in the apparatus, the respective input of the PPC is connected to a corresponding power source, and the input of the PPC and the output of the PPC have one common terminal, and the PPC comprises at least one controllable switch, and wherein the at least one of the first PPC string and the second PPC string is connected in parallel with a DC bus, and a circuit protector, comprising at least one of: one PPC protector corresponding to each PPC in the apparatus; one set protector corresponding to each PPC set in the apparatus; and one string protector corresponding to each of the first PPC string and the second PPC string.

According to the embodiments of the present disclosure, the apparatus of power conversion can provide at least the following advantages:
1) PPCs based on power electronics and the corresponding circuit protector can sense the power source fault and eliminate the fault influence, so that the fault influence can be limited, thereby providing fast fault diagnosis, location and clearance;
2) The unbalanced current between the parallel connected strings of power sources (such as the battery cells) can be limited, thereby the lifetime of the power sources can be extended;
3) More accurate control for each power source can be provided, thereby making full use of the energy of each power source, even if the multiple power sources in one string are in different status (for example, in different SOC status)
4) More than one PPCs can be connected in series to build DC bus with higher voltage level, which makes the connection to the MV system easier (for example, through a grid-connected AC/DC converter);
5) With the PPC, the power efficiency can be improved and the capital cost can be reduced, thereby providing a low cost solution;
6) Power sources can be decoupled with each other, so that power sources with different characteristics (for example, power sources from different suppliers) can be used together, and new power sources can be added to augment the capacity or prolong the lifetime of the apparatus; and
7) The modular designed PPCs are easy to be replaced and have a limited maintenance cost, thereby reducing the maintenance cost of the whole apparatus.

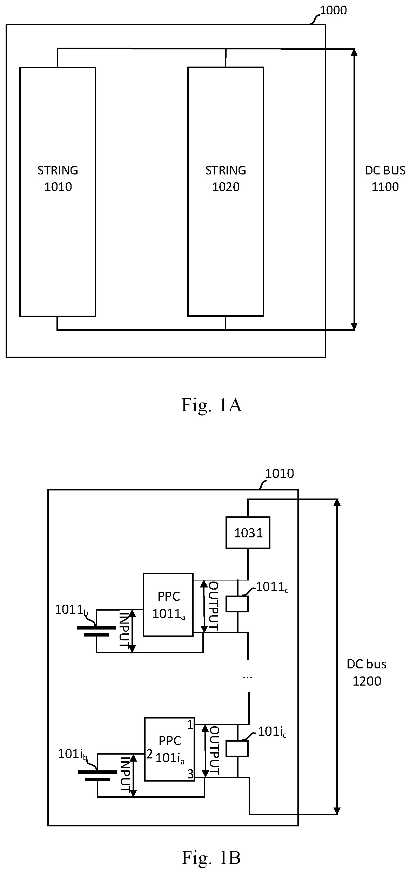

Figs. 1A-1C are schematic diagrams illustrating an apparatus of power conversion 1000 according to an embodiment of the present disclosure.

According to some embodiments, the apparatus of power conversion 1000 includes at least one of a first PPC string 1010 and a second PPC string 1020, wherein the at least one of a first PPC string 1010 and a second PPC string 1020 is connected in parallel with a DC bus 1100. As shown in Fig. 1A, the apparatus of power conversion 1000 includes both the first PPC string 1010 and the second PPC string 1020, but the apparatus of power conversion 1000 may include only one of the first PPC string 1010 and the second PPC string 1020. The structure of the first PPC string 1010 and the second PPC string 1020 is illustrated below with reference to Figs. 1B-1C respectively.

As shown in Fig. 1B, the first PPC string 1010 includes more than one series-connected PPCs 1011ₐ, ... , 101iₐ, wherein the outputs of the PPCs 1011ₐ, ..., 101iₐ in the string 1010 are connected in series, and an input of each PPC of the PPCs 1011ₐ, ..., 101iₐ is connected to a corresponding power source, for example, the input of the PPC 1011ₐ is connected to the corresponding power source 1011_{b}, and the input of the PPC 10j1ₐ is connected to the corresponding power source 10j1_{b}.

According to some embodiments, "the outputs of the PPCs are connected in series" means that, for each PPC, one output terminal of the PPC is connected to an output terminal of an adjacent PPC closer to a first terminal of the DC bus, and the other output terminal of the PPC is connected to an output terminal of another adjacent PPC closer to a second terminal of the DC bus.

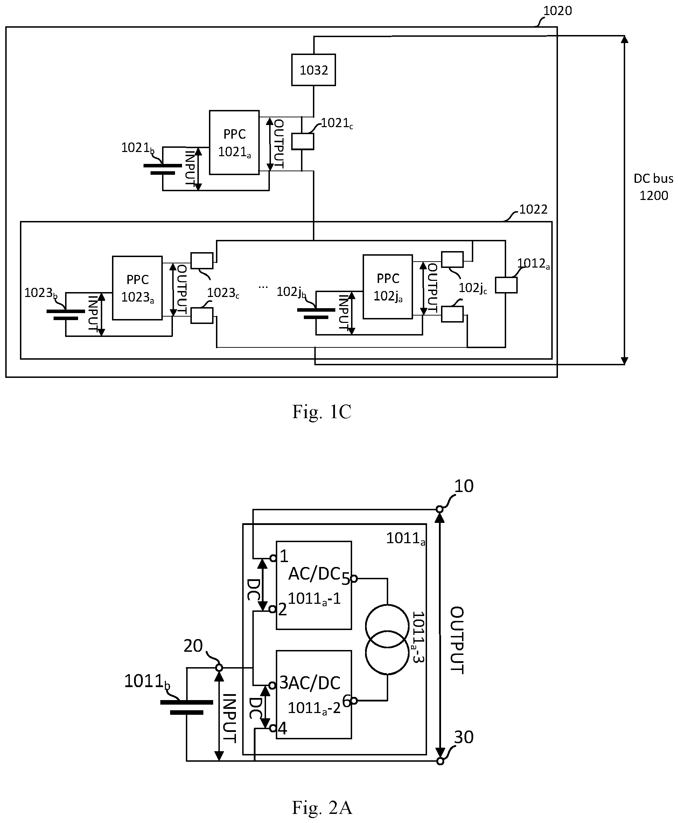

As shown in Fig. 1C, the second string includes at least one series-connected PPC 1021 and at least one PPC set 1022, wherein each PPC set includes more than one parallel-connected PPCs, for example, the PPC set 1022 includes PPC 1023ₐ, ..., 102jₐ that are connected in parallel. According to some embodiments, in each PPC set, a respective output of each PPC of the more than one parallel-connected PPCs is connected in parallel to form the output of the PPC set. For example, the output of PPC 1023ₐ, ..., 102jₐ are connected in parallel to form the output of the PPC set 1022. According to some embodiments, in the second PPC string 1200, a respective output of each of the at least one series-connected PPC 1021 and the at least one PPC set 1022 is connected in series. According to some embodiments, for each PPC in the second string 1200, the input of the PPC is connected to a corresponding power source, for example, the series-connected PPC 1021ₐ is connected to the corresponding power source 1021_{b}, and the parallel-connected PPC 1023ₐ in the PPC set 1022 is connected to the corresponding power source 1023_{b}.

According to some embodiments, "a respective output of each of the at least one series-connected PPC and the at least one PPC set is connected in series" means that, for each PPC or PPC set, one output terminal of the PPC or PPC set is connected to an output terminal of an adjacent PPC or PPC set closer to a first terminal of the DC bus, and the other output terminal of the PPC or PPC set is connected to an output terminal of another adjacent PPC or PPC set closer to a second terminal of the DC bus.

According to some embodiments, as shown in Figs. 1B and 1C, for each PPC in the apparatus, the input of the PPC and the output of the PPC have one common terminal. According to some embodiments, the PPC in the apparatus comprises at least one controllable switch, wherein the controllable switch is able to be controlled (for example, according to a turn-on/ turn-off signal) and may include IGBT, IGCT, MOSFET, GTO, a triode and the like.

Herein, the partial power converter in present disclosure refers to a converter having partial power processing characteristic, i.e., a fraction of the power goes directly from the source to the load bypassing the converter and the remaining power is processed by the converter, so that the overall efficiency can be improved and the capital cost can be decreased compared with the full power converter.

According to some embodiments, to provide protection for fault occurred in the apparatus 1000, the apparatus 1000 further includes a circuit protector, including at least one of one PPC protector corresponding to each PPC in the apparatus; one set protector corresponding to each PPC set in the apparatus; and one string protector corresponding to each of the first PPC string and the second PPC string.

For example, as shown in Fig. 1B, in the first PPC string 1100, there are a string protector 1031 corresponding to the first PPC string 1100 and PPC protectors 1011_{c}, ..., 101i_{c} corresponding to PPCs 1011ₐ, ..., 101iₐ, wherein the PPC protector 1011_{c} corresponds to the PPC 1011ₐ, ..., the PPC protector 101i_{c} corresponds to the PPC 101iₐ.

For another example, as shown in Fig. 1C, in the second PPC string, there are a string protector 1032 corresponding to the second PPC string 1200, a set protector 1012ₐ corresponding to the PPC set 1022 and PPC protectors 1021_{c}, 1023_{c}, ..., 102j_{c} corresponding to PPCs 1021ₐ, 1023ₐ, ... , 102jₐ, wherein the PPC protectors 1021ₐ corresponds to 1021_{c}, the PPC protectors 1023ₐ corresponds to 1023_{c}, ..., the PPC protectors 102jₐ corresponds to 102j_{c}.

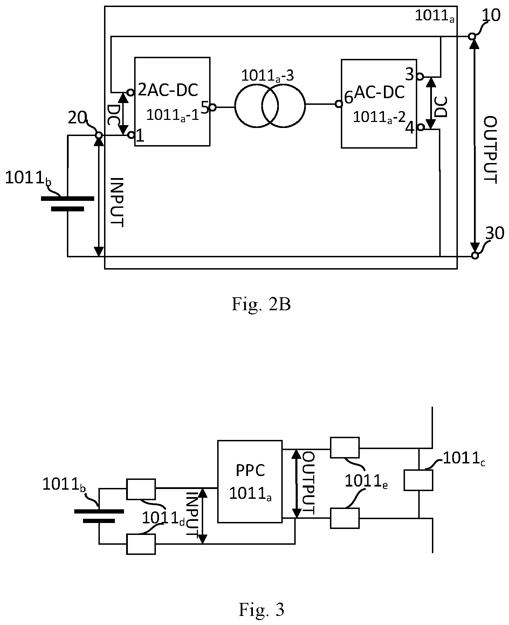

It should be understood that the setting of the circuit protector in Figs. 1B-1C is only for illustration and the setting of the circuit protector can be different. For example, the string protector, the set protector or the PPC protector in Figs. 1B-1C can be omitted. For another example, the position of the PPC protector can be different from that shown in Figs. 1B-1C, for example, there can be PPC protector connected in series with the input and/or output of the PPC. The exemplary implementation of the circuit protector will be further discussed with reference to Figs. 3, 4 and 5A-5B.

According to some embodiments, in addition to at least one of the first PPC string 1100 and the second PPC string 1200, the apparatus 1000 may also include other string of PPCs, such as another string of series-connected PPCs or series-parallel-connected PPCs, or a string of one PPC. According to some embodiments, for the string of one PPC, there may be a string protector and/or a PPC protector in the string.

Figs. 2A-2B are schematic diagrams illustrating the connection configuration of the PPC in Fig. 1A-1C (such as the PPC 1011ₐ, ..., 101iₐ in Fig. 1B and the PPC 1021ₐ, ..., 102jₐ in Fig. 1C) according to an embodiment of the present disclosure.

According to some embodiments, as shown in Figs. 2A-2B, the PPC 1011ₐ includes a first AC/DC converter 1011ₐ -1 and a second AC/DC converter 1011ₐ-2. Herein, the term "AC/DC converter" is not intended to limit the conversion directions of AC and DC of the converter. The AC/DC converter may convert DC to AC or convert AC to DC. For example, any of first AC/DC converter 1011ₐ -1 and a second AC/DC converter 1011ₐ -2 may have the following circuit structure: H bridge, IGBT, IGCT, MOSFET, GTO or a single diode, and the like.

According to some embodiments, as shown in Figs. 2A-2B, the first AC/DC converter 1011ₐ -1 and the second AC/DC converter 1011ₐ -2 coupled at AC ports of the first AC/DC converter 1011ₐ -1 and the second AC/DC converter 1011ₐ -2, and the DC port of the second AC/DC converter forms one of the input and the output of the PPC 1011ₐ. A DC port of the first AC/DC converter 1011ₐ -1 and the DC port of the second AC/DC converter 1011ₐ -2 are connected in series to form the other of the input and the output of the PPC 1011ₐ.

According to some embodiments, the DC port of the second AC/DC converter 1011ₐ -2 are connected in series to form the other of the input and the output of the PPC 1011 means that, for each AC/DC converter, one DC terminal of the DC port is connected to the DC terminal of the DC port of the other AC/DC converter, and the other terminal of the DC port is connected to the terminal of the PPC (i.e., the terminal of the input or output of the PPC).

According to some embodiments, an AC side of the first AC/DC converter 1011ₐ -1 and an AC side of the second AC/DC converter 1011ₐ -2 are electromagnetically coupled or coupled through a capacitor. The "electromagnetically coupled" may refer to being coupled through a transformer 1011ₐ -3 or inductor.

According to some embodiments, as shown in Fig. 2A, the first AC/DC converter 1011ₐ -1 and the second AC/DC converter 1011ₐ -2 coupled at AC ports of the first AC/DC converter 1011ₐ -1 and the second AC/DC converter 1011ₐ -2, and the DC port of the second AC/DC converter forms the input of the PPC 1011ₐ. A DC port of the first AC/DC converter 1011ₐ -1 and the DC port of the second AC/DC converter 1011ₐ -2 are connected in series to form the output of the PPC 1011ₐ.

According to some embodiments, as shown in Fig. 2A, the first AC/DC converter 1011ₐ -1 and the second AC/DC converter 1011ₐ -2 coupled at AC ports of the first AC/DC converter 1011ₐ -1 and the second AC/DC converter 1011ₐ -2, and the DC port of the second AC/DC converter forms the input of the PPC 1011ₐ. A DC port of the first AC/DC converter 1011ₐ -1 and the DC port of the second AC/DC converter 1011ₐ -2 are connected in series to form the output of the PPC 1011ₐ.

According to some embodiments, as shown in Fig. 2A, a DC side of the first AC/DC converter 1011ₐ -1 has a first DC terminal 1 and a second DC terminal 2, and a DC side of the second AC/DC converter 1011ₐ -2 has a third DC terminal 3 and a fourth DC terminal 4, wherein the first DC terminal 1 is connected to the first terminal 10 of the PPC 1011ₐ, the second DC terminal 2 and the third DC terminal 3 are connected to the second terminal 20 of the PPC 1011ₐ, and the fourth DC terminal 4 is connected to the third terminal 30 of the PPC 1011ₐ. In this case, a part of the power goes directly from the power source 1011_{b} to the output of the PPC 1011ₐ by bypassing the first AC/DC converter 1011ₐ -1 and the second AC/DC converter 1011ₐ -2 and the remaining power is processed by the first AC/DC converter 1011ₐ -1 and the second AC/DC converter 1011ₐ -2 and then delivered to the output of the PPC 1011ₐ.

According to some embodiments, as shown in Fig. 2B, the first AC/DC converter 1011ₐ -1 and the second AC/DC converter 1011ₐ -2 coupled at AC ports of the first AC/DC converter 1011ₐ -1 and the second AC/DC converter 1011ₐ -2, and the DC port of the second AC/DC converter forms the output of the PPC 1011ₐ. A DC port of the first AC/DC converter 1011ₐ - 1 and the DC port of the second AC/DC converter 1011ₐ -2 are connected in series to form the input of the PPC 1011ₐ.

According to some embodiments, as shown in Fig. 2B, a DC side of the first AC/DC converter 1011ₐ -1 has a first DC terminal 1 and a second DC terminal 2, and a DC side of the second AC/DC converter 1011ₐ -2 has a third DC terminal 3 and a fourth DC terminal 4, wherein the first DC terminal 1 is connected to the second terminal 20 of the PPC 1011ₐ, the second DC terminal 2 and the third DC terminal 3 are connected to the first terminal 10 of the PPC 1011ₐ, and the fourth DC terminal 4 is connected to the third terminal 30 of the PPC 1011ₐ. In this case, a part of the power goes directly from the power source 1011_{b} to the output of the PPC 1011ₐ by bypassing the first AC/DC converter 1011ₐ -1 and the second AC/DC converter 1011ₐ -2 and the remaining power is processed by the first AC/DC converter 1011ₐ -1 and the second AC/DC converter 1011ₐ -2 and then delivered to the output of the PPC 1011ₐ.

In some embodiments, at least one switching device in each of the first AC/DC converter 1011ₐ -1 and the second AC/DC converter 1011ₐ -2 is a controllable switch. The controllable switch may include IGBT, IGCT, MOSFET, GTO, a triode and the like.

In some embodiments, a rated power of each of the first AC/DC converter 1011ₐ -1 and the second AC/DC converter 1011ₐ -2 may be less than a rated power of the respective power source 101 1_{b}, thereby further reducing the cost of the converter and increasing the power efficiency.

According to some embodiments, the circuit protector comprises the one PPC protector corresponding to each PPC in the apparatus, which corresponds to a series-connected PPC and comprises: a bypass switch connected in parallel with the output of the PPC; and at least one group of series-connected switches, comprising at least one of: a first group of switches connecting in series with the input of the PPC; and a second group of switches connecting in series with the output of the PPC. According to the embodiments of the present disclosure, as discussed below with reference to FIG. 3, by setting the bypass switch connected in parallel with the output of the PPC, the corresponding PPC can be bypassed when a fault occurs at the series-connected PPC, so that other normal PPC and/or PPC set in the same string can continue operation, and the reliability of the apparatus is improved; by setting the switch connected in series with the input and/or output of the PPC, power from the input and/or output of the PPC can be cut off, thus achieving the effect of fault removal.

Fig. 3 is a schematic diagram illustrating the PPC protector corresponding to the series-connected PPC in the apparatus of power conversion 1000 in Figs. 1A-1C (such as the PPC 1011ₐ, ..., 101iₐ in Fig. 1B and the PPC 1021ₐ in Fig. 1C) according to an embodiment of the present disclosure.

As shown in Fig. 3, the PPC protector for the PPC 1011ₐ includes a bypass switch 1011_{c} connected in parallel with the output of the PPC 1011ₐ and at least one of a first group of switches 1011_{d} and a second group of switches 1011ₑ, wherein the first group of switches 1011_{d} is connected in series with the input of the PPC 1011ₐ, and the second group of switches 1011ₑ is connected in series with the output of the PPC 1011ₐ.

According to some embodiments, the first group of switches 1011_{d} and/or the second group of switches 1011ₑ can be used to cut off the power of the PPC 1011ₐ and can be disconnectors or other types of workable switches. According to some embodiments, the bypass switch 1011_{c} can be used to bypass the PPC 1011ₐ and can be a breaker or other types of a workable switch.

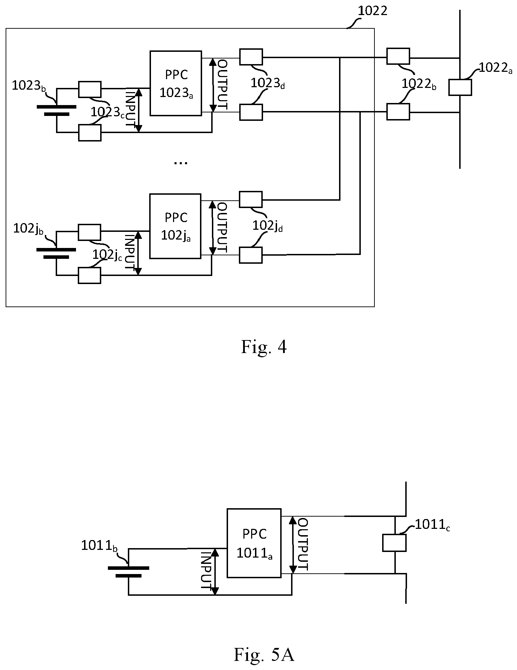

According to some embodiments, the apparatus comprises the second PPC string, and the circuit protector comprises the one PPC protector corresponding to each PPC in the apparatus and the one set protector corresponding to each PPC set in the apparatus, and wherein the PPC protector corresponds to a parallel-connected PPC and comprises: a first group of switches connecting in series with the input of the PPC; and/or a second group of switches connecting in series with the output of the PPC, and wherein the set protector comprises: a bypass switch connecting in parallel with the output of the PPC set. According to some embodiments, the set protector further comprises: a group of series-connected switches connecting in series with the output of the PPC set. According to the embodiments of the present disclosure, as discussed in more detail in FIG. 4, by setting the switch connected in series with the input and/or output of the PPC, the power from the input and/or output of the PPC can be cut off when a fault occurs at the parallel-connected PPC within the PPC set, thus achieving the effect of fault removal; and, by setting the bypass switch for the PPC set, the PPC set can be bypassed when the parallel-connected PPCs within the PPC set are cut off due to fault, so that other normal PPC and/or PPC set in the same string can continue operation and the reliability of the apparatus is improved.

Fig. 4 is a schematic diagram illustrating the PPC protector corresponding to the parallel-connected PPC (such as PPC 1023ₐ, ..., PPC 102jₐ in Fig. 1C) and the set protector corresponding to the PPC set (such as PPC set 1022 in Fig. 1C) in the apparatus of power conversion 1000 in Figs. 1A-1C according to an embodiment of the present disclosure.

For each of the parallel-connected PPCs in the PPC set 1022, as shown in Fig. 4, the corresponding PPC protector includes a first group of switches connecting in series with the input of the PPC; and/or a second group of switches connecting in series with the output of the PPC. For example, the PPC protector corresponding to the PPC 1023ₐ includes a first group of switches 1023_{c} connecting in series with the input of the PPC 1023ₐ and/or a second group of switches 1023_{d} connecting in series with the output of the PPC 1023ₐ. According to some embodiments, the first group of switches and/or the second group of switches of the PPC protector can be used to cut off the power of the PPC and can be disconnectors or other types of workable switches.

For the PPC set 1022, as shown in Fig. 4, the corresponding set protector includes a bypass switch connecting in parallel with the output of the PPC set 1022ₐ. According to some embodiments, the bypass switch 1022ₐ can be used to bypass the parallel-connected PPCs 1023ₐ, ... , 102jₐ in the PPC set 1022 and can be a breaker or other types of a workable switch. In addition, the set protector for the PPC set 1022 may further includes a group of series-connected switches 1022_{b} connecting in series with the output of the PPC set 1022, which can be used to cut off the power from the parallel-connected PPCs 1023ₐ, ... , 102jₐ in the PPC set 1022 for safety and can also be omitted for conciseness. According to some embodiments, the group of series-connected switches 1022_{b} can be disconnectors or other types of workable switches.

Figs. 5A-5D are schematic diagrams illustrating the PPC protector corresponding to the series-connected PPC in the apparatus of power conversion 1000 in Figs. 1A-1C (such as the PPC 1011ₐ, ..., 101iₐ in Fig. 1B and the PPC 1021ₐ in Fig. 1C) according to an embodiment of the present disclosure.

According to some embodiments, the circuit protector comprises the one PPC protector corresponding to each PPC in the apparatus, which corresponds to a series-connected PPC and comprises: a bypass switch connected in parallel with the output of the PPC. According to the embodiments of the present disclosure, as discussed in more detail in FIG. 5A, by setting the bypass switch connected to the output of the PPC in parallel, the PPC corresponding to the fault can be bypassed when the fault occurs at the series-connected PPC, so that other normal PPC and/or PPC set in the same string can continue operation and the reliability of the apparatus is improved.

As shown in Fig. 5A, the PPC protector includes a bypass switch 1011_{c} connected in parallel with the output of the PPC 1011ₐ. According to some embodiments, the bypass switch 1011_{c} can be used to bypass the PPC 1011ₐ and can be a breaker or other types of a workable switch.

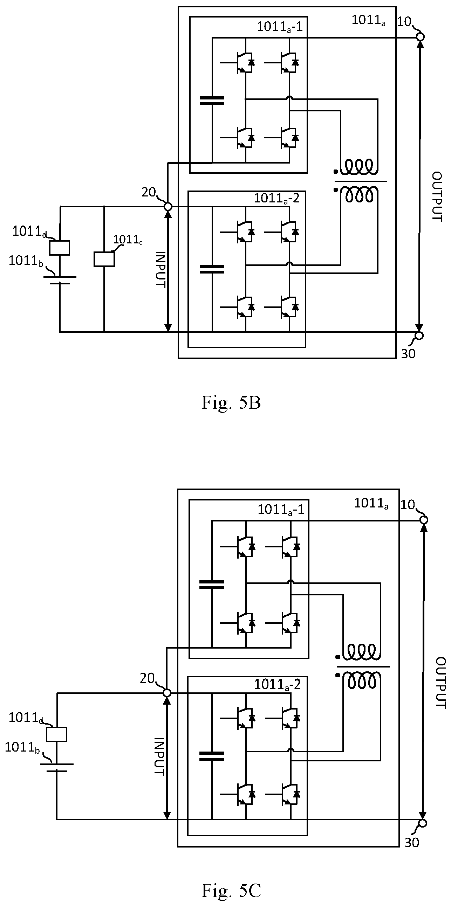

According to some embodiments, the PPC in the apparatus includes a first AC/DC converter and a second AC/DC converter coupled at AC ports of the first AC/DC converter and the second AC/DC converter, and wherein a DC port of the second AC/DC converter forms the input of the PPC, and a DC port of the first AC/DC converter and the DC port of the second AC/DC converter are connected in series to form the output of the PPC, and wherein the circuit protector comprises the one PPC protector corresponding to each PPC in the apparatus, which corresponds to a series-connected PPC and comprises: a bypass switch connected in parallel with the input of the PPC. According to the embodiments of the present disclosure, as discussed in more detail in FIG. 5B, by setting the bypass switch connected in parallel with the input of the PPC, when a fault occurs at the series-connected PPC, the bypass switch and the first AC/DC in the PPC can bypass the PPC corresponding to the fault, so that other normal PPC and/or PPC set in the same string can continue operation and the reliability of the apparatus is improved. In addition, to reduce the capital cost of PPC, in the configuration of the connection of AC/DC converters as shown in Figure 5B, the controllable switch in the first AC/DC converter in PPC usually has low voltage and high current characteristics, while the controllable switch in the second AC/DC converter in PPC usually has low current and high voltage characteristics. The first AC/DC converter with the high current characteristic is used to bypass the high current of other normally series-connected PPC and/or PPC set in the same string, while the second AC/DC converter with the low current characteristic is bypassed by the bypass switch to avoid undertaking the high current of other normally series-connected PPC and/or PPC set in the same string, making full use of the controllable switches in the PPC according to their characteristics.

As shown in Fig. 5B, the PPC protector includes a bypass switch 1011_{c} connected in parallel with the output of the PPC 1011ₐ. According to some embodiments, the bypass switch 1011_{c} can be used to bypass the second AC/DC converter 1011ₐ-2 in the PPC 1011ₐ and can be a breaker or other types of a workable switch. According to some embodiments, when the fault occurs in the corresponding power source 1011_{b}, the first AC/DC converter 1011ₐ-1 can be used in combination with the bypass switch 1011_{c} to bypass the power source 1011_{b}, for example, the controllable switches in the first AC/DC converter 1011ₐ-1 (for example, a H bridge circuit) are held closed to bypass the current.

In addition, as shown in Fig. 5B, the PPC protector also includes a source protection device 1011_{d} connected in series with the corresponding power source 1011_{b}, which can be fuse or load switch or contactor to cut off the connection between the power source 101 1_{b} and the PPC 1011ₐ when the fault occurs in the corresponding power source 1011_{b}.

According to some embodiments, the bypass switch connected in parallel with the input of the PPC can be omitted, and both the first AC/DC converter and the second AC/DC converter in the PPC are used to bypass the corresponding power source. For example, the controllable switches in the first AC/DC converter and the second AC/DC converter (for example, H bridge circuits) are held closed to bypass the current, so that other normal PPC and/or PPC set in the same string can continue operation, and the reliability of the apparatus is improved.

As shown in Fig. 5C, the PPC protector only includes a source protection device 1011_{d} connected in series with the corresponding power source 1011_{b}, which can be fuse or load switch or contactor to cut off the connection between the power source 1011_{b} and the PPC 1011ₐ when the fault occurs in the corresponding power source 1011_{b}.

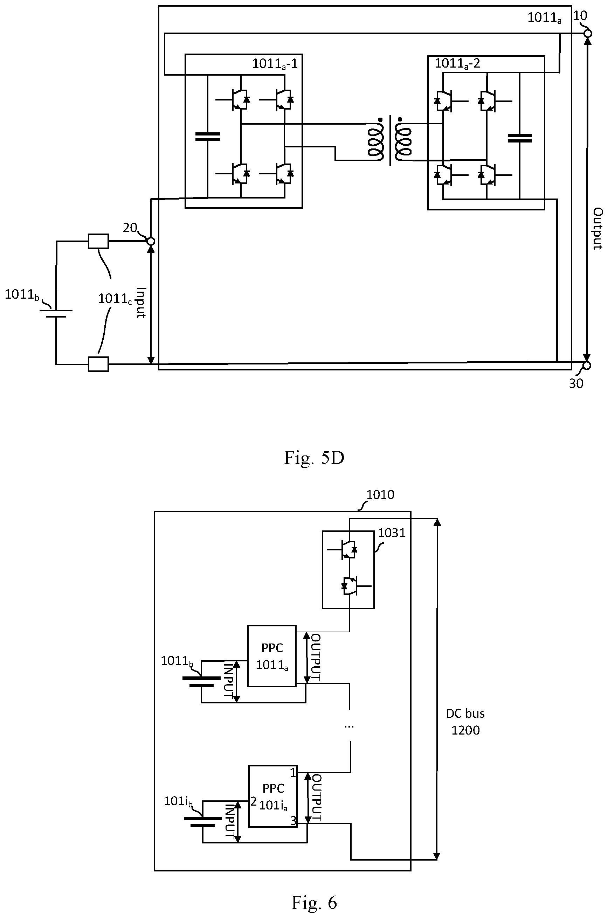

According to some embodiments, the PPC in the apparatus includes a first AC/DC converter and a second AC/DC converter coupled at AC ports of the first AC/DC converter and the second AC/DC converter, and wherein a DC port of the second AC/DC converter forms the output of the PPC, and a DC port of the first AC/DC converter and the DC port of the second AC/DC converter are connected in series to form the input of the PPC, and wherein the circuit protector comprises the one PPC protector corresponding to each PPC in the apparatus, which corresponds to a series-connected PPC and comprises: a group of series-connected switches connecting in series with the input of the PPC. According to the embodiments of the present disclosure, as discussed in more detail in FIG. 5D, when the fault occurs at the series-connected PPC, the PPC corresponding to the fault can be bypassed by the second AC/DC converter in the PPC, so that other normal PPC and/or PPC set in the same string can continue operation, and the reliability of the apparatus is improved; accordingly, only the components of the second AC/DC converter in the PPC (for example, the controllable switch), and not all the components in the PPC need to be designed with a capacity large enough to bypass current, thus saving the cost of device expansion. For example, as shown in Figure 5D, the PPC protector includes a group of series-connected switches 1011_{c} connecting in series with the input of the PPC 1011ₐ.

According to some embodiments, the series-connected switches of the PPC protector may be used to cut off the electrical connection between the power source and the PPC, and be disconnectors or other types of workable switches. According to some embodiments, the second AC/DC converter 1011ₐ-2 may be used in conjunction with the series-connected switches 1011_{c} to bypass PPC 1011_{b} when the fault occurs at the corresponding power source 1011_{b}. For example, as shown in Figure 5D, the controllable switch of the second AC/DC converter 1011ₐ-2 (e.g. H-bridge circuit) is kept closed to bypass the current that would otherwise pass through PPC 1011ₐ, while the series-connected switches 1011c are switched off to cut off the electrical connection from PPC 1011ₐ (especially the output side of PPC 1011ₐ) to the power source 1011_{b}.

According to some embodiments, the circuit protector comprises the one string protector corresponding to each of the first PPC string and the second PPC string, which comprises: a string switch connected in series with the output of the series-connected PPCs in the string corresponding to the string protector. According to the embodiments of the present disclosure, the string switch can be set to cut off the corresponding string in the event of the relative serious intra-string fault (e.g., a short circuit fault at the power supply) so as not to affect the normal operation of other strings in the apparatus, or all strings in the apparatus may be cut off in the event of the fault at the bus (e.g., a short circuit fault) to protect all components of the apparatus from the influence of the bus fault.

Fig. 6 is a schematic diagram illustrating the string protector for the string of PPCs in the apparatus of power conversion 1000 in Figs. 1A-1C (such as the strings 1010 and 1020 in Figs. 1A-1C) according to an embodiment of the present disclosure.

As shown in Fig. 6, the string protector corresponding to the string 1010 includes a string switch 1031 connected in series with the PPCs 1011ₐ, ..., 101iₐ. According to some embodiments, the string switch can be a bidirectional breaker or other types of workable switch. According to some embodiments, the string switch includes two controllable switches connected in series, as shown in Fig. 6.

It should be understood that the connection of PPCs in Fig. 6 is only for illustration, and the string protector in the present disclosure also applies to the string of series-parallel-connected PPCs, as the string protector 1032 in Fig. 1C.

According to some embodiments, a method of operating the apparatus of power conversion is provided, including: in response to that a fault occurs in the apparatus, operating the circuit protector. According to the embodiments of the present disclosure, as will be further discussed below, the fault in the apparatus can be cleared by corresponding operation of the circuit protector, so as to improve the reliability of the apparatus.

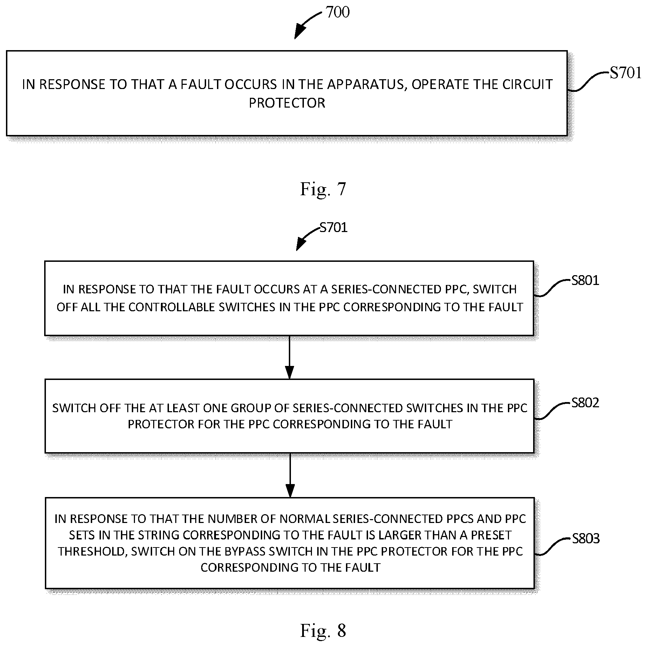

Fig. 7 is a flowchart showing a method 700 for controlling an apparatus for power conversion 1000 in Figs. 1A-1C according to an embodiment of the present disclosure, in which the apparatus for power conversion is substantially the same as described with reference to Figs. 1A-1C, and thus the details as to the same features are omitted here for conciseness. As shown in Fig. 7, the method 700 includes the step S701.

In step S701, in response to that a fault occurs in the apparatus, the circuit protector is operated.

The details of step S701 is described below.

According to some embodiments, the corresponding PPC protector, the set protector and/or the string protector operates according to the position and the type of the fault occurred in the apparatus.

According to some embodiments, the circuit protector comprises the one PPC protector corresponding to each PPC in the apparatus, which corresponds to a series-connected PPC and comprises: a bypass switch connected in parallel with the output of the PPC; and at least one group of series-connected switches, comprising at least one of: a first group of switches connecting in series with the input of the PPC; and a second group of switches connecting in series with the output of the PPC, and wherein the operating the circuit protector comprises: in response to that the fault occurs at a series-connected PPC, switching off all the controllable switches in the PPC corresponding to the fault; switching off the at least one group of series-connected switches in the PPC protector for the PPC corresponding to the fault; and in response to that the number of normal series-connected PPCs and PPC sets in the string corresponding to the fault is larger than a preset threshold, switching on the bypass switch in the PPC protector for the PPC corresponding to the fault. According to the embodiments of the present disclosure, as will be discussed below with reference to Fig. 8, by switching off all controllable switches in the PPC corresponding to the fault, the operation of the PPC can be quickly stopped and the impact of the fault can be reduced; by switching off the switches connected in series with the input and/or output of the PPC, the power from the input and/or output of the PPC can be cut off, thus achieving the effect of fault removal; by setting the bypass switch connected in parallel with the output of the PPC, when the fault occurs at the series-connected PPC, the PPC corresponding to the fault can be bypassed, so that other normal PPC and/or PPC set in the same string can continue operation and the reliability of the apparatus is improved.

Fig. 8 is a flowchart illustrating the process S701 of operating the circuit protector in Fig. 7 according to an embodiment of the present disclosure. According to some embodiments, the process S701 shown in Fig. 8 can be performed through the PPC 1011ₐ and the PPC protector in Fig. 3. As shown in Fig. 8, the process 701 includes:
In step S801, in response to that the fault occurs at a series-connected PPC, all the controllable switches in the PPC corresponding to the fault are switched off.

According to some embodiments, "the fault occurs at a series-connected PPC" means that the fault occurs in the series-connected PPC or the corresponding power source connected to the PPC.

For example, the thermal runaway may happen during the charging/discharging operation of battery cells due to extreme working conditions or battery defect, and the controller of the PPC may receive the information of abnormal operation of the battery from BMS or an additional sensor (e.g. temperature sensor or gas sensor) when the temperature of the battery exceeds the threshold value.

According to some embodiments, when the fault occurs at a series-connected PPC, all controllable switches in the PPC are turned off through stopping the PWM signals of the controllable switches in the PPC. For example, for the PPC protector shown in Fig. 3, the PWM signals of controllable switches in the PPC 1011ₐ are stopped.

In step S802, the at least one group of series-connected switches in the PPC protector for the PPC corresponding to the fault is switched off.

For example, for the PPC protector shown in Fig. 3, the first group of series-connected switches 1011_{d} can be switched off to cut off the power from the input of the PPC 1011ₐ, and/or the second group of series-connected switches 1011ₑ can be switched off to cut off the power from the output of the PPC 1011ₐ.

In step S803, in response to that the number of normal series-connected PPCs and PPC sets in the string corresponding to the fault is larger than a preset threshold, the bypass switch in the PPC protector for the PPC corresponding to the fault is switched on.

For example, for the PPC protector shown in Fig. 3, the bypass switch 1011_{c} can be switched on to bypass the PPC 1011ₐ.

According to some embodiments, after the bypass switch of the PPC corresponding to the fault is switched on, the operation of the normal series-connected PPCs and PPC sets in the string can be resumed to recover the operation of the string, wherein the normal series-connected PPCs and PPC sets in the string are connected in parallel with the DC bus.

According to some embodiments, when the apparatus of power conversion is controlling the DC bus voltage, the voltage references of the normal series-connected PPCs and PPC sets in the same string are increased, so that the loss of the PPC corresponding to the fault can be compensated and the normal series-connected PPCs and PPC sets in the same string can still operate.

According to some embodiments, in response to that the number of normal series-connected PPCs and PPC sets in the string corresponding to the fault is less than or equal to a preset threshold, the normal series-connected PPCs and PPC sets in the string can not withstand the DC bus voltage, e.g., the normal series-connected PPCs and PPC sets in the string can not build the DC bus voltage, and the bypass switch in the PPC protector for the PPC remains switched off.

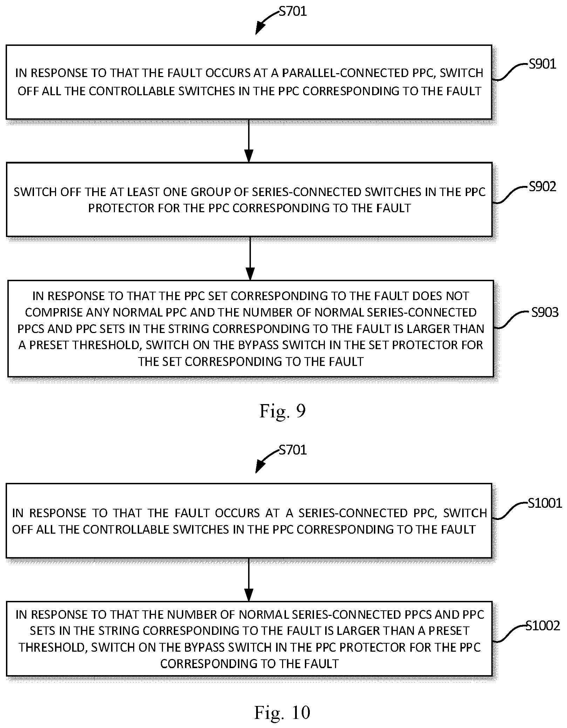

According to some embodiments, the apparatus comprises the second PPC string, and the circuit protector comprises the one PPC protector corresponding to each PPC in the apparatus and the one set protector corresponding to each PPC set in the apparatus, and wherein the PPC protector corresponds to a parallel-connected PPC and comprises: a first group of switches connecting in series with the input of the PPC; and/or a second group of switches connecting in series with the output of the PPC, and wherein the operating the circuit protector comprises: in response to that the fault occurs at a parallel-connected PPC, switching off all the controllable switches in the PPC corresponding to the fault; and switching off the at least one group of series-connected switches in the PPC protector for the PPC corresponding to the fault. According to the embodiments of the present disclosure, as will be discussed below with reference to Fig. 9, by switching off all controllable switches in the PPC corresponding to the fault, the operation of the PPC can be quickly stopped and the impact of the fault can be reduced; by switching off the switches connected in series with the input and/or output of the PPC, the power from the input and/or output of the PPC can be cut off, thus achieving the effect of fault removal.

According to some embodiments, the set protector comprises: a bypass switch connecting in parallel with the output of the PPC set, and wherein the operating the circuit protector further comprises: in response to that the PPC set corresponding to the fault does not comprise any normal PPC and the number of normal series-connected PPCs and PPC sets in the string corresponding to the fault is larger than a preset threshold, switching on the bypass switch in the set protector for the set corresponding to the fault. According to the embodiments of the present disclosure, as will be discussed below with reference to Fig. 9, by switching on the bypass switch connected in parallel with the output of the PPC set, the PPC set can be bypassed when all parallel-connected PPCs within the PPC set are cut off due to fault, so that other normal PPC and/or PPC set in the same string can continue operation and the reliability of the apparatus is improved.

Fig. 9 is a flowchart illustrating the process S701 of operating the circuit protector in Fig. 7 according to an embodiment of the present disclosure. According to some embodiments, the process S701 shown in Fig. 9 can be performed through the PPC 1023ₐ, ... , 102jₐ and the PPC protector in Fig. 4. As shown in Fig. 9, the process 701 includes:
In step S901, in response to that the fault occurs at a parallel-connected PPC, all the controllable switches in the PPC corresponding to the fault are switched off. According to some embodiments, Step S901 can be implemented similar to Step S801 in Fig. 8, and the description therefore is omitted for conciseness. For example, for the PPC protector shown in Fig. 4, when the fault occurs at the PPC 1023ₐ, the PWM signals of controllable switches in the PPC 1023ₐ are stopped.

In step S902, the at least one group of series-connected switches in the PPC protector for the PPC corresponding to the fault is switched off. According to some embodiments, Step S902 can be implemented similar to Step S802 in Fig. 8, and the description therefore is omitted for conciseness. For example, for the PPC protector shown in Fig. 4, when the fault occurs at the PPC 1023ₐ, the first group of series-connected switches 1023_{d} can be switched off to cut off the power from the input of the PPC 1023ₐ, and/or the second group of series-connected switches 1011ₑ can be switched off to cut off the power from the output of the PPC 1023ₐ.

In step S903, in response to that the PPC set corresponding to the fault does not comprise any normal PPC and the number of normal series-connected PPCs and PPC sets in the string corresponding to the fault is larger than a preset threshold, the bypass switch in the set protector for the set corresponding to the fault is switched on.

For example, for the set protector shown in Fig. 4, when the fault occurs in the set of PPCs 1022 and the PPC set 1022 does not include any normal PPC (i.e., the PPC 1023ₐ, ..., 102jₐ in the set of PPCs 1022 fail and are cut off by the PPC protector), the bypass switch 1022ₐ corresponding to the set of PPCs 1022 is switched on.

According to some embodiments, when there is still one or more normal PPCs in the PPC set corresponding to the fault, after the PPC corresponding to the fault is cut off due to the fault, the normal PPCs in the PPC set can still operate.

According to some embodiments, when the apparatus of power conversion is controlling the DC bus voltage, after all the PPCs in the set of PPCs are cut off due to fault, the voltage references of the normal series-connected PPCs and PPC sets in the same string are increased, so that the loss of the PPC corresponding to the fault can be compensated and the normal series-connected PPCs and PPC sets in the same string can still operate.

According to some embodiments, similar to the description of Step S803, in response to that the number of normal series-connected PPCs and PPC sets in the string corresponding to the fault is less than or equal to a preset threshold, the normal series-connected PPCs and PPC sets in the string cannot withstand the DC bus voltage, e.g., the normal series-connected PPCs and PPC sets in the string cannot build the DC bus voltage, and the bypass switch in the PPC protector for the PPC remains switched off.

According to some embodiments, the PPC in the apparatus includes a first AC/DC converter and a second AC/DC converter coupled at AC ports of the first AC/DC converter and the second AC/DC converter, and wherein a DC port of the second AC/DC converter forms the input of the PPC, and a DC port of the first AC/DC converter and the DC port of the second AC/DC converter are connected in series to form the output of the PPC, and wherein the method further comprises: in response to that the fault occurs at a series-connected PPC and the number of normal series-connected PPCs and PPC sets in the string corresponding to the fault is larger than a preset threshold, switching on all the controllable switches in the PPC corresponding to the fault. According to the embodiments of the present disclosure, as will be further discussed below, by switching on all controllable switches in the corresponding PPC, the PPC corresponding to the fault can be bypassed when the fault occurs at the series-connected PPC, so that other normal PPC and/or PPC set in the same string can continue operation and the reliability of the apparatus is improved.

According to some embodiments, when the fault occurs at a series-connected PPC, all controllable switches in the PPC are held closed, which means the controllable switches in the PPC receive the turning-on signals constantly.

For example, for the PPC protector shown in Fig. 5C, all controllable switches in the AC/DC converters 1011ₐ-1 and 1011ₐ-2 are switched on, so that the current goes through the controllable switches in the AC/DC converters 1011ₐ-1 and 1011ₐ-2, and other normal series-connected PPC and/or PPC set in the same string can still continue their operation.

According to some embodiments, when the fault occurs, the state of the source protection device 1011_{d} changes, which can be detected to trigger the fault protection operation, such as the switching on all controllable switches in the PPC as mentioned above. For example, when the source protection device 1011_{d} is a fuse, the fuse is broken when the fault occurs, which can be detected by the BMS and further sent to the controller of the PPC to send the turning-on signals to all controllable switches in the PPC.

According to some embodiments, the circuit protector comprises the one PPC protector corresponding to each PPC in the apparatus, which corresponds to a series-connected PPC and comprises: a bypass switch connected in parallel with the output of the PPC, and wherein the operating the circuit protector comprises: in response to that the fault occurs at a series-connected PPC, switching off all the controllable switches in the PPC corresponding to the fault; and in response to that the number of normal series-connected PPCs and PPC sets in the string corresponding to the fault is larger than a preset threshold, switching on the bypass switch in the PPC protector for the PPC corresponding to the fault. According to the embodiments of the present disclosure, as will be further discussed reference to Fig. 10 below, by switching on the bypass switch connected in parallel with the output of the PPC, the PPC corresponding to the fault can be bypassed when the fault occurs at the series-connected PPC, so that other normal PPC and/or PPC set in the same string can continue operation and the reliability of the apparatus is improved.

Fig. 10 is a flowchart illustrating the process S701 of operating the circuit protector in Fig. 7 according to an embodiment of the present disclosure. According to some embodiments, the process S701 shown in Fig. 10 can be performed through the PPC 1011ₐ and the PPC protector in Fig. 5A. As shown in Fig. 10, the process 701 includes:
In step S1001, in response to that the fault occurs at a series-connected PPC, all the controllable switches in the PPC corresponding to the fault are switched off. According to some embodiments, Step S1001 can be implemented similar to Step S801 in Fig. 8, and the description therefore is omitted for conciseness. For example, for the PPC protector shown in Fig. 5A, the PWM signals of controllable switches in the PPC 1011ₐ are stopped.

In step S 1002, in response to that the number of normal series-connected PPCs and PPC sets in the string corresponding to the fault is larger than a preset threshold, the bypass switch in the PPC protector for the PPC corresponding to the fault is switched on. According to some embodiments, Step S1002 can be implemented similar to Step S803 in Fig. 8, and the description therefore is omitted for conciseness. For example, for the PPC protector shown in Fig. 5A, the bypass switch 1011_{c} can be switched on to bypass the PPC 1011ₐ, so that the current goes through the bypass switch 1011_{c}, and other normal series-connected PPC and/or PPC set in the same string can still continue their operation.

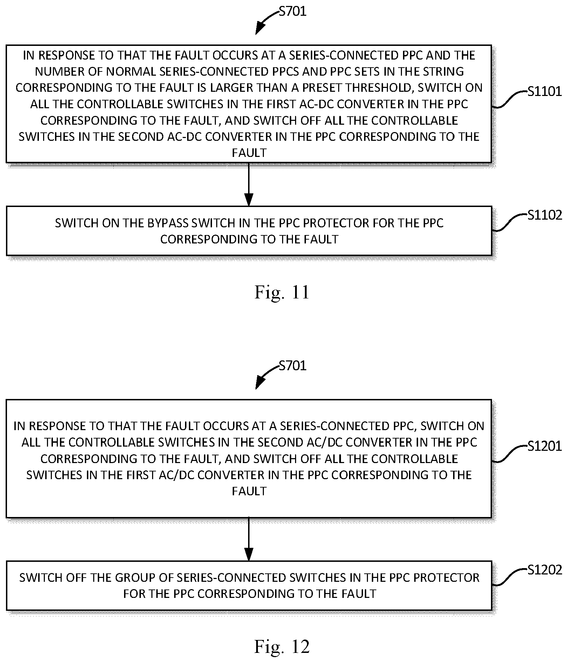

According to some embodiments, the PPC in the apparatus includes a first AC/DC converter and a second AC/DC converter coupled at AC ports of the first AC/DC converter and the second AC/DC converter, and wherein a DC port of the second AC/DC converter forms the input of the PPC, and a DC port of the first AC/DC converter and the DC port of the second AC/DC converter are connected in series to form the output of the PPC, and wherein the circuit protector comprises the one PPC protector corresponding to each PPC in the apparatus, which corresponds to a series-connected PPC and comprises: a bypass switch connected in parallel with the input of the PPC, wherein the operating the circuit protector comprises: in response to that the fault occurs at a series-connected PPC and the number of normal series-connected PPCs and PPC sets in the string corresponding to the fault is larger than a preset threshold, switching on all the controllable switches in the first AC/DC converter in the PPC corresponding to the fault, and switching off all the controllable switches in the second AC/DC converter in the PPC corresponding to the fault; and switching on the bypass switch in the PPC protector for the PPC corresponding to the fault. According to the embodiments of the present disclosure, as will be discussed with reference to Fig. 11, by closing the bypass switch connected in parallel with the input of the PPC and the controllable switch in the first AC/DC converter, when the fault occurs at the series-connected PPC, the PPC corresponding to the fault can be bypassed, so that other normal PPC and/or PPC set in the same string can continue operation and the reliability of the apparatus is improved; in addition, to reduce the capital cost of PPC, the controllable switch in the first AC/DC converter in PPC can be designed to have the low voltage and high current characteristics, while the controllable switch in the second AC/DC converter in PPC can be designed to the have low current and high voltage characteristics, the first AC/DC converter with the high current characteristic is used to bypass the high current of other normally series-connected PPC and/or PPC set in the same string, while the second AC/DC converter with the low current characteristic is bypassed by the bypass switch to avoid undertaking the high current of other normally series-connected PPC and/or PPC set in the same string, making full use of the controllable switches in the PPC according to their characteristics.

Fig. 11 is a flowchart illustrating the process S701 of operating the circuit protector in Fig. 7 according to an embodiment of the present disclosure. According to some embodiments, the process S701 shown in Fig. 11 can be performed through the PPC 1011ₐ and the PPC protector in Fig. 5B. As shown in Fig. 11, the process 701 includes:
In step S1101, in response to that the fault occurs at a series-connected PPC and the number of normal series-connected PPCs and PPC sets in the string corresponding to the fault is larger than a preset threshold, all the controllable switches in the first AC/DC converter in the PPC corresponding to the fault are switched on, and all the controllable switches in the second AC/DC converter in the PPC corresponding to the fault are switched off.

For example, for the PPC protector shown in Fig. 5B, all the controllable switches in the first AC/DC converter 1011ₐ-1 in the PPC 1011ₐ are switched on, and all the controllable switches in the second AC/DC converter 1011ₐ-2 in the PPC 1011ₐ are switched off.

According to some embodiments, when the fault occurs at a series-connected PPC, all controllable switches in the first AC/DC converter are held closed, for example, the controllable switches in the PPC keep receiving the turning-on signals, and all controllable switches in the second AC/DC converter are held open, for example, the controllable switches in the PPC keep receiving the turning-off signals.

According to some embodiments, when the fault occurs, the state of the source protection device 1011_{d} changes, which can be detected to trigger the fault protection operation, such as the switching on all the controllable switches in the first AC/DC converter in the PPC corresponding to the fault and switching off all the controllable switches in the second AC/DC converter in the PPC corresponding to the fault as mentioned above.

In step S1102, the bypass switch in the PPC protector for the PPC corresponding to the fault is switched on.

For example, for the PPC protector shown in Fig. 5B, the bypass switch 1011_{c} connected in parallel with the input of the second AC/DC converter 1011ₐ-2, so that the current goes through the first AC/DC converter 1011ₐ-1 and the first bypass switch 1011_{c}, and other normal series-connected PPC and/or PPC set in the same string can still continue their operation.

According to some embodiments, the PPC in the apparatus includes a first AC/DC converter and a second AC/DC converter coupled at AC ports of the first AC/DC converter and the second AC/DC converter, and wherein a DC port of the second AC/DC converter forms the output of the PPC, and a DC port of the first AC/DC converter and the DC port of the second AC/DC converter are connected in series to form the input of the PPC, and wherein the circuit protector comprises the one PPC protector corresponding to each PPC in the apparatus, which corresponds to a series-connected PPC and comprises: a group of series-connected switches connecting in series with the input of the PPC, wherein the operating the circuit protector comprises: in response to that the fault occurs at a series-connected PPC, switching on all the controllable switches in the second AC/DC converter in the PPC corresponding to the fault, and switching off all the controllable switches in the first AC/DC converter in the PPC corresponding to the fault; and switching off the group of series-connected switches in the PPC protector for the PPC corresponding to the fault. According to the embodiments of the present disclosure, by switching on the controllable switch in the second AC/DC converter in the PPC, the PPC corresponding to the fault can be bypassed when the fault occurs at the series-connected PPC, so that other normal PPC and/or PPC set in the same string can continue operation, and the reliability of the apparatus is improved; accordingly, only the components of the second AC/DC converter in the PPC (for example, the controllable switch), and not all the components in the PPC need to be designed with a capacity large enough to bypass current, thus saving the cost of device expansion.

Fig. 12 is a flowchart illustrating the process S701 of operating the circuit protector in Fig. 7 according to an embodiment of the present disclosure. According to some embodiments, the process S701 shown in Fig. 12 can be performed through the PPC 1011ₐ and the PPC protector in Fig. 5D. As shown in Fig. 12, the process 701 includes:
In step S1201, in response to that the fault occurs at a series-connected PPC, switching on all the controllable switches in the second AC/DC converter in the PPC corresponding to the fault, and switching off all the controllable switches in the first AC/DC converter in the PPC corresponding to the fault.

For example, for the PPC protector shown in Fig. 5D, all the controllable switches in the second AC/DC converter 1011ₐ-2 in the PPC 1011ₐ are switched on, and all the controllable switches in the first AC/DC converter 1011ₐ-1 in the PPC 1011ₐ are switched off.

According to some embodiments, when the fault occurs at a series-connected PPC, all controllable switches in the first AC/DC converter are held open, for example, the controllable switches in the PPC keep receiving the turning-off signals, and all controllable switches in the second AC/DC converter are held closed, for example, the controllable switches in the PPC keep receiving the turning-on signals.

According to some embodiments, when the fault occurs, the state of the source protection device 1011_{d} changes, which can be detected to trigger the fault protection operation, such as the switching on all the controllable switches in the second AC/DC converter in the PPC corresponding to the fault and switching off all the controllable switches in the first AC/DC converter in the PPC corresponding to the fault as mentioned above.

In step S1202, the group of series-connected switches in the PPC protector for the PPC corresponding to the fault is switched off.

For example, for the PPC protector shown in Fig. 5D, the series-connected switches 1011_{c} is switched off to cut off the electrical connection from PPC 1011ₐ (especially the output side of the PPC 1011ₐ) to the power source 1011_{b}.

According to some embodiments, the circuit protector comprises the one string protector corresponding to each of the first PPC string and the second PPC string, which comprises: a string switch connected in series with the output of the series-connected PPCs in the string corresponding to the string protector, and wherein the operating the circuit protector comprises: in response to that the fault is a short-circuited fault at the DC bus, switching off all the string switches in the apparatus; and in response to that the fault is a short-circuited fault at a power source, turning off all the controllable switches in the PPC corresponding to the fault, or switching off the string switch in the string protector for the string corresponding to the fault. According to the embodiments of the present disclosure, by cutting off all strings in the apparatus when the short-circuit fault occurs at the bus, all components in the apparatus are protected from the bus fault; by switching off all controllable switches in the PPC corresponding to the fault or switching off the string switch in the string protector for the string corresponding to the fault, the current is prevented from flowing from the bus to the power source, and the fast increase of current caused by the short-circuit fault is avoided.

For example, for the string protector shown in Fig. 6, when a short-circuited fault occurs at the DC bus, the string switch 1031 is switched off (for example, the controllable switches in the string switch 1031 are switched off), so that the string current can be stopped from increasing quickly; when a short-circuited fault occurs at a power source (for example, the power source 1011_{b}), all the controllable switches in the PPC corresponding to the fault (for example, the PPC 1011ₐ corresponding to the power source 1011ₐ) are switched off, or the string switch 1031 is switched off, so that the current is prevented from flowing from the bus to the power source to stop the current from increasing quickly due to the short-circuit fault.

According to the embodiments of the present disclosure, a system for power conversion is provided, which includes: the above apparatus of power conversion (e.g., the apparatus 1000 in Figs. 1A-1C); a DC bus (e.g., the DC bus 1200 in Figs. 1A-1C); and a plurality of power sources connected to the apparatus (e.g., the power sources 1011_{b}, ..., 101i_{b},..., 1021_{b},...,102k_{b} in Figs. 1A-1C).

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes functions or operations, or may be implemented by a combination of dedicated hardware and computer instructions.

The foregoing descriptions are merely preferred embodiments of the present disclosure and explanations of the applied technical principles. Those skilled in the art should understand that the scope of the present disclosure involved in the embodiments of the present disclosure is not limited to the technical solutions formed by specific combinations of the foregoing technical features, and shall also cover other technical solutions formed by any combination of the foregoing technical features or equivalent features thereof without departing from the foregoing inventive concept. For example, a technical solution formed by a replacement of the foregoing features with technical features with similar functions in the technical features disclosed in the embodiments of the present disclosure (but not limited thereto) also falls within the scope of the present disclosure.

## Claims

1. An apparatus for power conversion comprising:
at least one of a first partial power converter (PPC) string and a second PPC string,
wherein the first PPC string comprising more than one series-connected PPCs, wherein an output of each PPC of the more than one series-connected PPCs is connected in series; and
wherein the second PPC string comprising at least one series-connected PPC and at least one PPC set, wherein each PPC set comprises more than one parallel-connected PPCs, the respective outputs of the more than one parallel-connected PPCs are connected in parallel and further connected to the output of the PPC set, and respective outputs of the at least one series-connected PPC and the at least one PPC set are connected in series,
wherein, for each PPC in the apparatus, the respective input of the PPC is connected to a corresponding power source, and the input of the PPC and the output of the PPC have one common terminal, and the PPC comprises at least one controllable switch, and
wherein the at least one of the first PPC string and the second PPC string is connected in parallel with a DC bus, and
a circuit protector, comprising at least one of:
one PPC protector corresponding to each PPC in the apparatus;
one set protector corresponding to each PPC set in the apparatus; and
one string protector corresponding to each of the first PPC string and the second PPC string.

2. The apparatus according to claim 1, wherein the circuit protector comprises the one PPC protector corresponding to each PPC in the apparatus, which corresponds to a series-connected PPC and comprises:
a bypass switch connected in parallel with the output of the PPC; and
at least one group of series-connected switches, comprising at least one of:
a first group of switches connecting in series with the input of the PPC; and
a second group of switches connecting in series with the output of the PPC.

3. The apparatus according to claim 1 or 2, wherein the apparatus comprises the second PPC string, and the circuit protector comprises the one PPC protector corresponding to each PPC in the apparatus and the one set protector corresponding to each PPC set in the apparatus, and
wherein the PPC protector corresponds to a parallel-connected PPC and comprises:
a first group of switches connecting in series with the input of the PPC; and/or
a second group of switches connecting in series with the output of the PPC, and
wherein the set protector comprises:
a bypass switch connecting in parallel with the output of the PPC set.

4. The apparatus according to claim 1, wherein the PPC in the apparatus includes a first AC/DC converter and a second AC/DC converter coupled at AC ports of the first AC/DC converter and the second AC/DC converter, and wherein a DC port of the second AC/DC converter forms one of the input and the output of the PPC, and a DC port of the first AC/DC converter and the DC port of the second AC/DC converter are connected in series to form the other of the input and the output of the PPC, and
wherein the circuit protector comprises the one PPC protector corresponding to each PPC in the apparatus, which corresponds to a series-connected PPC, and
wherein, in response to that the DC port of the second AC/DC converter forms the input of the PPC and the DC port of the first AC/DC converter and the DC port of the second AC/DC converter are connected in series to form the output of the PPC, and the PPC protector comprises a bypass switch connected in parallel with the input of the PPC, and
wherein, in response to that the DC port of the second AC/DC converter forms the output of the PPC and the DC port of the first AC/DC converter and the DC port of the second AC/DC converter are connected in series to form the input of the PPC, and the PPC protector comprises a group of series-connected switches connecting in series with the input of the PPC.

5. The apparatus according to claim 1, wherein the circuit protector comprises the one PPC protector corresponding to each PPC in the apparatus, which corresponds to a series-connected PPC and comprises:
a bypass switch connected in parallel with the output of the PPC.

6. The apparatus according to claim 1, wherein the circuit protector comprises the one string protector corresponding to each of the first PPC string and the second PPC string, which comprises:
a string switch connected in series with the output of the series-connected PPCs in the string corresponding to the string protector.

7. A method of operating the apparatus of power conversion according to claim 1, comprising:
in response to that a fault occurs in the apparatus, operating the circuit protector.

8. The method according to claim 7, wherein the circuit protector comprises the one PPC protector corresponding to each PPC in the apparatus, which corresponds to a series-connected PPC and comprises:
a bypass switch connected in parallel with the output of the PPC; and
at least one group of series-connected switches, comprising at least one of:
a first group of switches connecting in series with the input of the PPC; and
a second group of switches connecting in series with the output of the PPC, and
wherein the operating the circuit protector comprises:
in response to that the fault occurs at a series-connected PPC, switching off all the controllable switches in the PPC corresponding to the fault;
switching off the at least one group of series-connected switches in the PPC protector for the PPC corresponding to the fault; and
in response to that the number of normal series-connected PPCs and PPC sets in the string corresponding to the fault is larger than a preset threshold, switching on the bypass switch in the PPC protector for the PPC corresponding to the fault.

9. The method according to claim 7, wherein the apparatus comprises the second PPC string, and the circuit protector comprises the one PPC protector corresponding to each PPC in the apparatus and the one set protector corresponding to each PPC set in the apparatus, and
wherein the PPC protector corresponds to a parallel-connected PPC and comprises:
a first group of switches connecting in series with the input of the PPC; and/or
a second group of switches connecting in series with the output of the PPC, and
wherein the operating the circuit protector comprises:
in response to that the fault occurs at a parallel-connected PPC, switching off all the controllable switches in the PPC corresponding to the fault; and
switching off the at least one group of series-connected switches in the PPC protector for the PPC corresponding to the fault.

10. The method according to claim 9, wherein the set protector comprises:
a bypass switch connecting in parallel with the output of the PPC set, and
wherein the operating the circuit protector further comprises:
in response to that the PPC set corresponding to the fault does not comprise any normal PPC and the number of normal series-connected PPCs and PPC sets in the string corresponding to the fault is larger than a preset threshold, switching on the bypass switch in the set protector for the set corresponding to the fault.

11. The method according to claim 7, wherein the PPC in the apparatus includes a first AC/DC converter and a second AC/DC converter coupled at AC ports of the first AC/DC converter and the second AC/DC converter, and wherein a DC port of the second AC/DC converter forms the input of the PPC, and a DC port of the first AC/DC converter and the DC port of the second AC/DC converter are connected in series to form the output of the PPC, and
wherein the method further comprises:
in response to that the fault occurs at a series-connected PPC and the number of normal series-connected PPCs and PPC sets in the string corresponding to the fault is larger than a preset threshold, switching on all the controllable switches in the PPC corresponding to the fault.

12. The method according to claim 7, wherein the circuit protector comprises the one PPC protector corresponding to each PPC in the apparatus, which corresponds to a series-connected PPC and comprises:
a bypass switch connected in parallel with the output of the PPC, and
wherein the operating the circuit protector comprises:
in response to that the fault occurs at a series-connected PPC, switching off all the controllable switches in the PPC corresponding to the fault; and
in response to that the number of normal series-connected PPCs and PPC sets in the string corresponding to the fault is larger than a preset threshold, switching on the bypass switch in the PPC protector for the PPC corresponding to the fault.

13. The method according to claim7, wherein the PPC in the apparatus includes a first AC/DC converter and a second AC/DC converter coupled at AC ports of the first AC/DC converter and the second AC/DC converter, and wherein a DC port of the second AC/DC converter forms the input of the PPC, and a DC port of the first AC/DC converter and the DC port of the second AC/DC converter are connected in series to form the output of the PPC, and
wherein the circuit protector comprises the one PPC protector corresponding to each PPC in the apparatus, which corresponds to a series-connected PPC and comprises:
a bypass switch connected in parallel with the input of the PPC,
wherein the operating the circuit protector comprises:
in response to that the fault occurs at a series-connected PPC and the number of normal series-connected PPCs and PPC sets in the string corresponding to the fault is larger than a preset threshold, switching on all the controllable switches in the first AC/DC converter in the PPC corresponding to the fault, and switching off all the controllable switches in the second AC/DC converter in the PPC corresponding to the fault; and
switching on the bypass switch in the PPC protector for the PPC corresponding to the fault.

14. The method according to claim 7, wherein the PPC in the apparatus includes a first AC/DC converter and a second AC/DC converter coupled at AC ports of the first AC/DC converter and the second AC/DC converter, and wherein a DC port of the second AC/DC converter forms the output of the PPC, and a DC port of the first AC/DC converter and the DC port of the second AC/DC converter are connected in series to form the input of the PPC, and
wherein the circuit protector comprises the one PPC protector corresponding to each PPC in the apparatus, which corresponds to a series-connected PPC and comprises:
a group of series-connected switches connecting in series with the input of the PPC,
wherein the operating the circuit protector comprises:
in response to that the fault occurs at a series-connected PPC, switching on all the controllable switches in the second AC/DC converter in the PPC corresponding to the fault, and switching off all the controllable switches in the first AC/DC converter in the PPC corresponding to the fault; and
switching off the group of series-connected switches in the PPC protector for the PPC corresponding to the fault.

15. The method according to claim 7, wherein the circuit protector comprises the one string protector corresponding to each of the first PPC string and the second PPC string, which comprises:
a string switch connected in series with the output of the series-connected PPCs in the string corresponding to the string protector, and
wherein the operating the circuit protector comprises:
in response to that the fault is a short-circuited fault at the DC bus, switching off all the string switches in the apparatus; and
in response to that the fault is a short-circuited fault at a power source, turning off all the controllable switches in the PPC corresponding to the fault, or switching off the string switch in the string protector for the string corresponding to the fault.
